# EUROPÄISCHE PATENTANMELDUNG

(11) **EP 3 627 683 A1**
(43) Veröffentlichungstag der Anmeldung: **25.03.2020**
(21) Anmeldenummer: 19197529.1
(22) Anmeldetag: 16.09.2019
(51) Int. Cl.: H02M 5/16, H02J 3/34, H02M 5/293, H02M 5/297, H02M 7/483, H02M 1/00

(54) **DIREKTUMRICHTER**

(30) Priorität: 18.09.2018 DE 102018215814
(71) Anmelder: Siemens Mobility GmbH, 81739 München (DE)
(72) Erfinder: Gruber, Rainer, 91560 Heilsbronn (DE)

(57) **Zusammenfassung**

Die Erfindung betrifft einen Direktumrichter (1) zur Energieübertragung von einem Dreiphasenwechselstromnetz in ein Einphasenwechselstromnetz (3), wobei das Dreiphasenwechselstromnetz (2) und das Einphasenwechselstromnetz (3) unterschiedliche Frequenzen aufweisen und der Direktumrichter (1) folgendes umfasst:
einen Multilevel-Umrichter (4) mit drei Umrichterarmen (7a,7b,7c), die jeweils an einem ersten Ende miteinander in einem ersten Sternpunkt verbunden sind, wobei jeder Umrichterarm mehrere in Serie zwischen dem ersten Ende und einem zweiten Ende verschaltete Submodule (8) aufweist und jedes der Submodule steuerbare Halbleiterschalteinrichtungen umfasst, eine Transformatoranordnung (5) zur Verbindung des Multilevel-Umrichters mit dem Dreiphasenwechselstromnetz und dem Einphasenwechselstromnetz, mit wenigstens einem ersten Satz (13) von in einem zweiten Sternpunkt miteinander verbundenen Dreiphasenwicklungen, die jeweils an einer Seite mit einem der zweiten Enden der Umrichterarme verbunden sind und an jeweils der anderen Seite miteinander verbunden sind, und eine Steuerungseinrichtung (6) zur Steuerung des Direktumrichters (1), die ausgebildet ist, den Multilevel-Umrichter (4) so zu steuern, dass eine Spannungskomponente mit der Frequenz des Einphasenwechselstromnetzes und wenigstens eine weitere Spannungskomponente mit der Frequenz des Dreiphasenwechselstromnetzes erzeugt wird. Um den Direktumrichter (1) konstruktiv einfach auszugestalten, ist erfindungsgemäß vorgesehen, dass die Transformatoranordnung (5) einen zweiten Satz (14) Dreiphasenwicklungen (14a, 14b, 14c) umfasst, die untereinander kurzgeschlossen sind und induktiv mit dem ersten Satz (13) Dreiphasenwicklungen (13a, 13b, 13c) verbunden sind.

## Beschreibung

Die Erfindung betrifft einen Direktumrichter zur Energieübertragung von einem Dreiphasenwechselstromnetz in ein Einphasenwechselstromnetz, wobei das Dreiphasenwechselstromnetz und das Einphasenwechselstromnetz unterschiedliche Frequenzen aufweisen und der Direktumrichter folgendes umfasst:
einen Multilevel-Umrichter mit drei Umrichterarmen, die jeweils an einem ersten Ende miteinander in einem ersten Sternpunkt verbunden sind, wobei jeder Umrichterarm mehrere in Reihe zwischen dem ersten Ende und einem zweiten Ende verschaltete Submodule aufweist und jedes der Submodule steuerbare Halbleiterschalteinrichtungen umfasst,
eine mit dem Multilevel-Umrichter verbundene Transformatoranordnung mit wenigstens einem ersten Satz Dreiphasenwicklungen, die jeweils an einer Seite mit einem der zweiten Enden der Umrichterarme und an jeweils der anderen Seite in einem zweiten Sternpunkt miteinander verbunden sind, und
eine Steuerungseinrichtung zur Steuerung des Direktumrichters, die ausgebildet ist, den Multilevel-Umrichter so zu steuern, dass eine Spannungskomponente mit der Frequenz des Einphasenwechselstromnetzes und wenigstens eine weitere Spannungskomponente mit der Frequenz des Dreiphasenwechselstromnetzes erzeugt wird.

Ein derartiger Direktumrichter ist aus dem Stand der Technik bekannt und beispielsweise in der EP 3 223 419 A1 beschrieben, die hier vollständig umfasst sein soll. Die verschiedenen Ausführungsformen der Direktumrichter der EP 3 223 419 A1 haben den Vorteil, dass der Multilevelumrichter lediglich drei Umrichterarme benötigt und dadurch gegenüber den zuvor üblichen Direktumrichtern sowohl Umrichterarme als auch Drosseln eingespart. Allerdings kann dadurch die Transformatoranordnung aufwändig oder die Performance nicht zufriedenstellend sein.

Der Erfindung liegt somit die Aufgabe zugrunde, einen Direktumrichter der eingangs genannten Art bereitzustellen, der eine konstruktiv möglichst einfache Transformatoranordnung bei zufriedenstellender Performance aufweist.

Erfindungsgemäß wird die Aufgabe dadurch gelöst, dass die Transformatoranordnung einen zweiten Satz Dreiphasenwicklungen umfasst, die untereinander kurzgeschlossen sind und induktiv mit dem ersten Satz Dreiphasenwicklungen verbunden sind.

Dies hat den Vorteil, dass die Transformatoranordnung konstruktiv einfach aufgebaut werden kann. Weiterhin wird durch den zweiten Satz kurzgeschlossener Dreiphasenwicklungen eine Zirkulation des Stroms des Einphasenwechselstromnetzes ermöglicht. So wird eine zufriedenstellende Performance des Direktumrichters erreicht.

Die erfindungsgemäße Lösung kann durch vorteilhafte Ausgestaltungen weiterentwickelt werden, die im Folgenden beschrieben sind.

So kann der zweite Satz Dreiphasenwicklungen als eine geschlossene Dreieckswicklung ausgebildet sein, die mit dem Drehstromnetz verbunden ist. Dies hat den Vorteil, dass der Strom in dem zweiten Satz Dreiphasenwicklungen besonders gut zirkulieren kann. Die Verbindung zwischen dem Drehstromnetz und der Dreieckswicklung kann sowohl direkt als auch induktiv ausgebildet sein. Alle nicht direkt miteinander verbundenen Wicklungen auf einem Schenkel der Transformatoranordnung sind induktiv miteinander gekoppelt.

Ferner kann die Transformatoranordnung einen dritten Satz Dreiphasenwicklungen umfassen, der mit dem Dreiphasenwechselstromnetz verbunden ist.

Im Folgenden wird die Erfindung mit Bezug auf die beigefügten Zeichnungen und den darin enthaltenen beispielhaften Ausführungsformen beschrieben.

Es zeigen:
- Figur 1: eine schematische Darstellung einer ersten beispielhaften Ausführungsform des erfindungsgemäßen Direktumrichters;
- Figur 2: eine schematische Darstellung einer weiteren Ausführungsform des erfindungsgemäßen Direktumrichters;
- Figur 3: eine schematische Darstellung einer weiteren Ausführungsform des erfindungsgemäßen Direktumrichters;
- Figur 4: eine schematische Darstellung einer weiteren Ausführungsform des erfindungsgemäßen Direktumrichters.

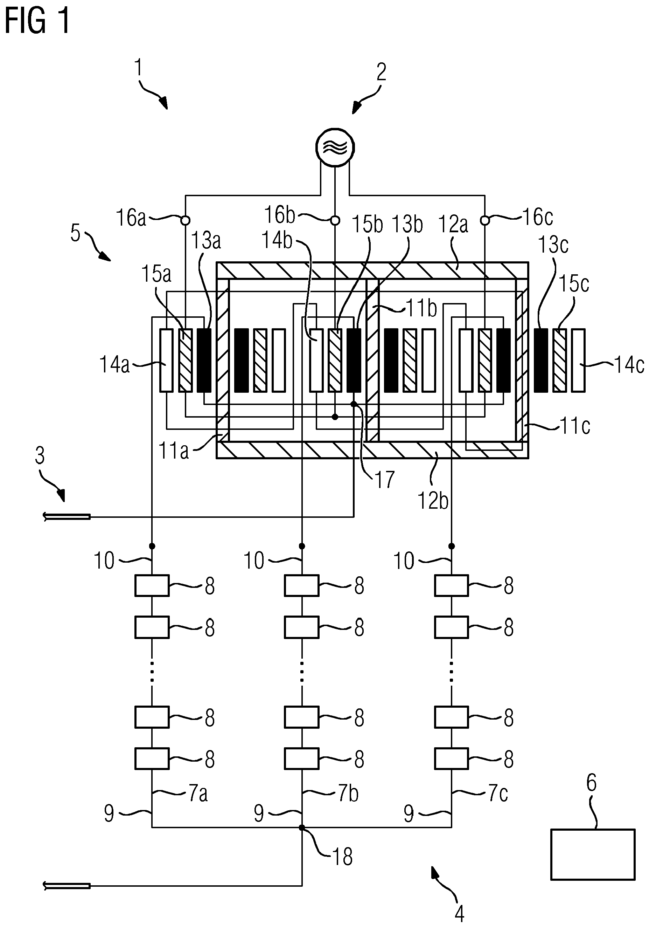

Zunächst wird die beispielhafte Ausführungsform eines erfindungsgemäßen Direktumrichters mit Bezug auf Figur 1 beschrieben.

Figur 1 zeigt einen erfindungsgemäßen Direktumrichter 1, der mit einem Dreiphasenwechselstromnetz 2 und einem Einphasenwechselstromnetz 3 verbunden ist. Der Direktumrichter 1 weist einen Multilevelumrichter 4, eine Transformatoranordnung 5 und eine Steuerungseinrichtung 6 auf.

Das Dreiphasenwechselstromnetz 2 ist beispielsweise ein Dreiphasenwechselstromnetz eines Energieversorgungsunternehmens, das beispielsweise 3 x 110 kV Spannung bei einer Frequenz von 50 Hz aufweist. Das Einphasenstromnetz 3 ist beispielsweise ein Stromversorgungsnetz einer verkehrstechnischen Anlage, wie z. B. ein Bahnstromversorgungsnetz, das beispielsweise eine Spannung von 1x 110 kV bei einer Frequenz von 16,66 Hz aufweist. In jedem Fall ist die Frequenz des Dreiphasenwechselstromnetzes 2 unterschiedlich von der Frequenz des Einphasenwechselstromnetzes 3. Der zwischen dem Dreiphasenwechselstromnetz 2 und dem Einphasenwechselstromnetz 3 angeordnete erfindungsgemäße Direktumrichter 1 ist zur Energieübertragung von dem Dreiphasenwechselstromnetz 2 in das Einphasenwechselstromnetz 1 ausgebildet.

Der Multilevelumrichter 4 weist drei Umrichterarme 7a, 7b, 7c auf. Jeder Umrichterarm 7a, 7b, 7c weist mehrere in Reihe verschaltete Submodule 8 auf, die zwischen einem ersten Ende 9 und einem zweiten Ende 10 jedes Umrichterarms 7a, 7b, 7c angeordnet sind. Die Submodule 8 weisen jeweils steuerbare Halbleiterschalteinrichtungen, wie z. B. IGBTs, auf. Die Submodule 8 sind in bekannter Weise als sogenannte Halbbrückenmodule oder sogenannte Vollbrückenmodule ausgebildet, wie es in der EP 3 223 419 A1 beschrieben ist, die hiermit vollständig umfasst sein soll.

Die Transformatoranordnung 5 weist drei Schenkel 11a, 11b, 11c auf, die an jedem Ende mit einem Joch 12a, 12b verbunden sind. Die Transformatoranordnung 5 weist weiterhin einen ersten Satz 13 von Dreiphasenwicklungen 13a, 13b, 13c auf, die um die Schenkel 11a, 11b, 11c gewickelt sind und auf der einen Seite jeweils mit einem der zweiten Enden 10a, 10b, 10c der Umrichterarme 7a, 7b, 7c und an der anderen Seite jeweils miteinander in einem Sternpunkt 17 verbunden sind. Ferner weist die Transformatoranordnung 5 an jedem Schenkel 11a, 11b, 11c einen zweiten Satz 14 Dreiphasenwicklungen 14a, 14b, 14c auf, die ausschließlich miteinander verbunden und somit kurzgeschlossen sind. Der zweite Satz 14 Dreiphasenwicklungen 14a, 14b, 14c ist induktiv mit dem ersten Satz 13 Dreiphasenwicklungen 13a, 13b, 13c verbunden und als eine geschlossene Dreieckswicklung ausgebildet. Schließlich weist die Transformatoranordnung 5 noch einen dritten Satz 15 Dreiphasenwicklungen 15a, 15b, 15c auf, die jeweils mit einer Phase 16a, 16b, 16c des Dreiphasenwechselstromnetzes 2 und am anderen Ende miteinander verbunden sind. Die Dreiphasenwicklungen 15a, 15b, 15c des dritten Satzes 15 sind jeweils mit denen des ersten Satzes 13 und des zweiten Satzes 14 induktiv verbunden.

Wie schon bei der Transformatoranordnung der EP 3 223 419 A1 können Stromrichterzweige und Drosseln eingespart werden, weil deren Aufgaben von der Transformatoranordnung 5 übernommen werden. Dadurch, dass die drei vorhandenen Umrichterarme 7a, 7b, 7c direkt an die Transformatoranordnung 5 angeschlossen sind, entfallen die sonst nötigen Glättungs- bzw. Kreisstromdrosseln. Da die drei Umrichterarme 7a, 7b, 7c sowohl den Strom des Einphasenwechselstromnetzes 3 als auch den Strom des Dreiphasenwechselstromnetzes 2 führen, werden diese Ströme auch beide in der Transformatoranordnung 5 geführt, und zwar in dem ersten Satz 13 Dreiphasenwicklungen 13a, 13b, 13c. Dabei ergänzen sich die Ströme des Dreiphasenwechselstromnetzes 2 im Sternpunkt 17 in etwa zu null. Entgegengesetzte Ströme des Dreiphasenwechselstromnetzes 2 fließen in dem dritten Satz 15 Dreiphasenwicklungen 15a, 15b, 15c. Die Ströme des Einphasenwechselstromnetzes 3 fließen in dem zweiten Satz 14 Dreiphasenwicklungen 14a, 14b, 14c.

Der Sternpunkt 17 der Transformatoranordnung 5 ist mit dem Einphasenwechselstromnetz 3 verbunden wie auch der Sternpunkt 18 des Multilevelumrichters 4.

Die Steuerungseinrichtung 6 ist, obwohl in Figur 1 der Einfachheit halber nicht dargestellt, mit dem Multilevelumrichter 4 verbunden, um diesen so zu steuern, dass in jedem Arm eine Spannungskomponente mit der Frequenz des Einphasenwechselstromnetzes 3 und wenigstens eine weitere Spannungskomponente mit der Frequenz des Dreiphasenwechselstromnetzes 2 erzeugt wird.

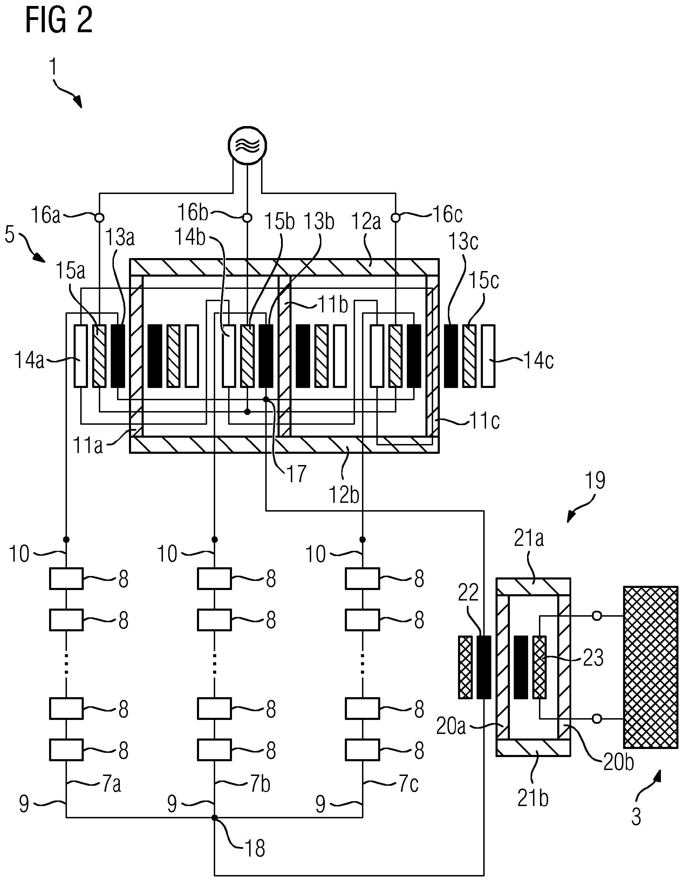

Im Folgenden wird die in Figur 2 schematisch dargestellte weitere Ausführungsform des erfindungsgemäßen Direktumrichters 1 beschrieben. Der Einfachheit halber wird lediglich auf die Unterschiede zu der in Figur 1 dargestellten Ausführungsform eingegangen.

Gleiche Teile sind mit gleichen Bezugszeichen versehen.

Im Unterschied zu der Ausführungsform in Figur 1 weist der Direktumrichter 1 in Figur 2 eine zusätzliche Transformatoranordnung 19 auf, die mit dem Einphasenwechselstromnetz 3, der Transformatoranordnung 5 und dem Multilevelumrichter 4 verbunden ist.

Die weitere Transformatoranordnung 19 umfasst zwei Schenkel 20a, 20b, die über ein oberes und unteres Joch 21a, 21b verbunden sind. Ferner weist die weitere Transformatoranordnung 19 eine erste Wicklung 22 auf. Die erste Wicklung 22 ist an dem einen Ende mit dem Sternpunkt 17 der ersten Transformatoranordnung 5 und am anderen Ende mit dem Sternpunkt 18 des Multilevelumrichters 4 verbunden. Die zweite Wicklung 23 ist an ihren beiden Enden mit dem Einphasenwechselstromnetz 3 verbunden. Die erste Wicklung 22 und die zweite Wicklung 23 sind induktiv miteinander verbunden. Durch die zusätzliche weitere Transformatoranordnung 19, die die erforderliche Spannungshöhe für das Einphasenwechselstromnetz 3 erzeugt, kann die erste Transformatoranordnung 5 einfacher ausgestaltet sein.

Bei den Ausführungsformen der Figuren 1 und 2 ist jeweils eine separate Wicklung 15a,15b,15c vorgesehen, die mit dem Dreiphasenwechselstromnetz 2 direkt verbunden ist. Generell sind alle Wicklungen auf einem Schenkel der Transformatoranordnung induktiv miteinander gekoppelt.

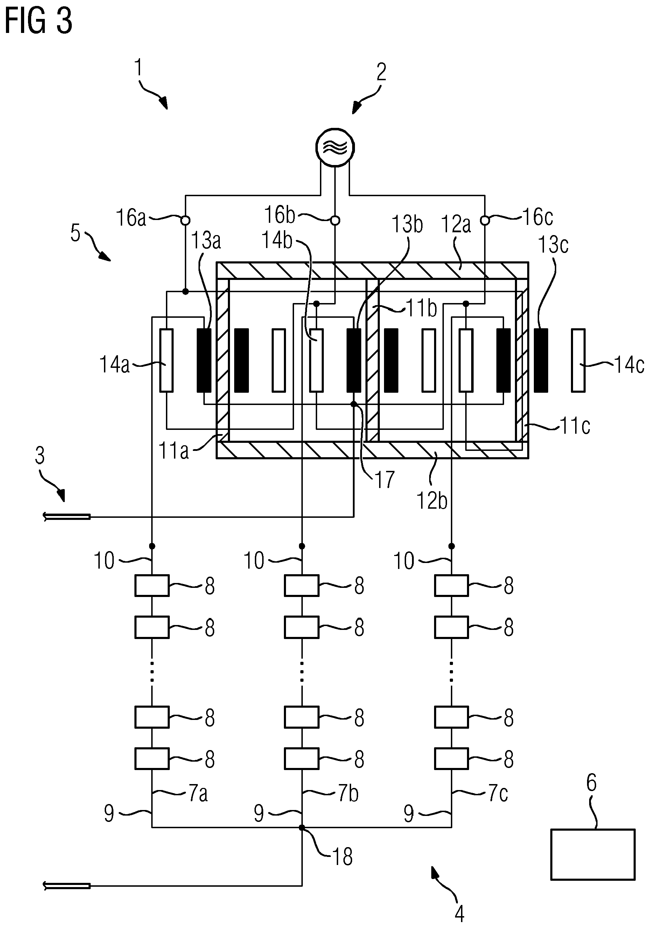

Im Folgenden wird die in Figur 3 schematisch dargestellte weitere Ausführungsform des erfindungsgemäßen Direktumrichters 1 beschrieben. Der Einfachheit halber wird lediglich auf die Unterschiede zu der in Figur 1 dargestellten Ausführungsform eingegangen. Gleiche Teile sind mit gleichen Bezugszeichen versehen.

Bei der in Figur 3 dargestellten Ausführungsform des Direktumrichters 1 ist das Dreiphasenwechselstromnetz 2 direkt mit der kurzgeschlossenen Dreieckswicklung 14 verbunden. Daher kann im Vergleich zur Ausführungsform in Figur 1 auf die Wicklung 15 verzichtet werden.

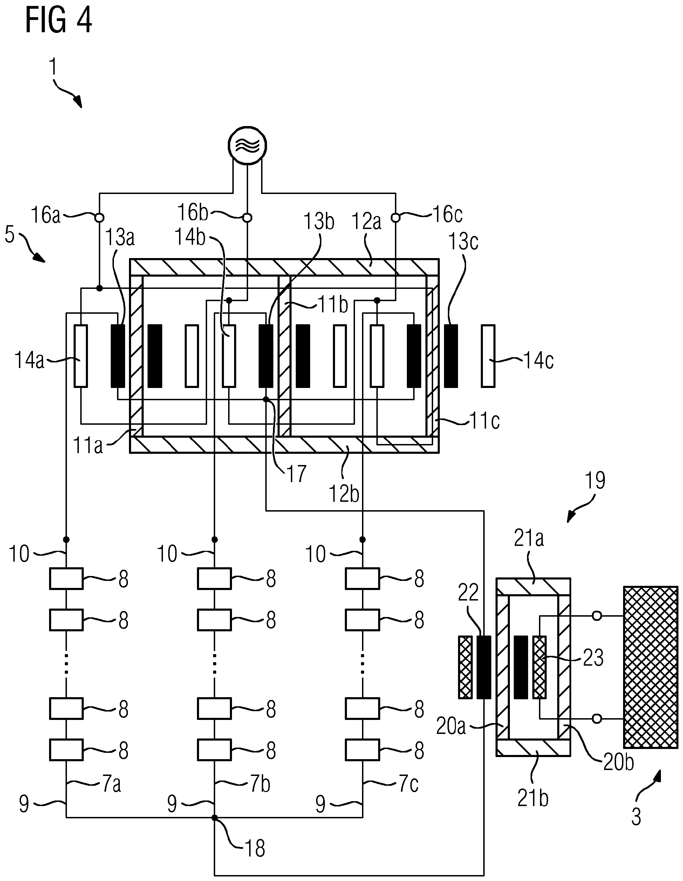

Im Folgenden wird die in Figur 4 schematisch dargestellte weitere Ausführungsform des erfindungsgemäßen Direktumrichters 2 beschrieben. Der Einfachheit halber wird lediglich auf die Unterschiede zu der in Figur 2 dargestellten Ausführungsform eingegangen. Gleiche Teile sind mit gleichen Bezugszeichen versehen.

Bei der in Figur 4 dargestellten Ausführungsform des Direktumrichters 1 ist das Dreiphasenwechselstromnetz 2 direkt mit der kurzgeschlossenen Dreieckswicklung 14 verbunden, ähnlich wie in Figur 3. Daher kann im Vergleich zur Ausführungsform in Figur 2 auf die Wicklung 15 verzichtet werden.

Bei den in den Figuren 3 und 4 dargestellten Ausführungsformen des Direktumrichters 1 wird auf eine eigene Wicklung für den Anschluss des Dreiphasenwechselstromnetzes 2 verzichtet, da die Dreieckswicklung 14a,14b,14c, in der der Bahnstrom im Kreis fließen kann, auch für den Anschluss des Dreiphasenwechselstromnetzes 2 genutzt wird. So wie die Wicklung 13 sowohl Bahnstrom als auch Drehstrom führt, führt auch die Wicklung 14 diese beiden Ströme.

## Patentansprüche

1. Direktumrichter (1) zur Energieübertragung von einem Dreiphasenwechselstromnetz (2) in ein Einphasenwechselstromnetz (3), wobei das Dreiphasenwechselstromnetz (2) und das Einphasenwechselstromnetz (3) unterschiedliche Frequenzen aufweisen und der Direktumrichter (1) folgendes umfasst:
einen Multilevel-Umrichter (4) mit drei Umrichterarmen (7a,7b,7c), die jeweils an einem ersten Ende (9) miteinander an einem ersten Sternpunkt (18) verbunden sind, wobei jeder Umrichterarm (7a,7b,7c) mehrere in Reihe zwischen dem ersten Ende (9) und dem zweiten Ende (10) verschaltete Submodule (8) aufweist und jedes der Submodule (8) steuerbare Halbleiterschalteinrichtungen umfasst,
eine mit dem Multilevel-Umrichter verbundene Transformatoranordnung (5) mit wenigstens einem ersten Satz (13) Dreiphasenwicklungen (13a,13b,13c), die jeweils an einer Seite mit einem der zweiten Enden (10) der Umrichterarme und an jeweils der anderen Seite in einem zweiten Sternpunkt (17) miteinander verbunden sind, und
eine Steuerungseinrichtung (6) zur Steuerung des Direktumrichters (1), die ausgebildet ist, den Multilevel-Umrichter (14) so zu steuern, dass eine Spannungskomponente mit der Frequenz des Einphasenwechselstromnetzes (3) und wenigstens eine weitere Spannungskomponente mit der Frequenz des Dreiphasenwechselstromnetzes (2) erzeugt wird,
**dadurch gekennzeichnet, dass**
die Transformatoranordnung (5) einen zweiten Satz (14) Dreiphasenwicklungen (14a,14b,14c) umfasst, die untereinander kurzgeschlossen sind und induktiv mit dem ersten Satz (13) Dreiphasenwicklungen (13a,13b,13c) verbunden sind.

2. Direktumrichter (1) nach Anspruch 1,
**dadurch gekennzeichnet, dass**
der zweite Satz (14) Dreiphasenwicklungen (14a,14b,14c) als geschlossene Dreieckswicklung ausgebildet ist, die mit dem Dreiphasenwechselstromnetz 2 verbunden ist.

3. Direktumrichter (1) nach Anspruch 1 oder 2,
**dadurch gekennzeichnet, dass**
die Transformatoranordnung (5) einen dritten Satz (15) Dreiphasenwicklungen (15a,15b,15c) umfasst, der mit dem Dreiphasenwechselstromnetz (2) verbunden ist.
